# EUROPEAN PATENT SPECIFICATION

(11) **EP 0 612 579 B1**
(45) Date of publication and mention of the grant of the patent: **14.05.1997**
(21) Application number: 94300777.3
(22) Date of filing: 02.02.1994
(51) Int. Cl.: B23K 35/36, B23K 1/20

(54) **Brazing of oxidisable alloys**
Hartlöten von oxidierbaren Legierungen
Brasage d'alliages oxidables

(30) Priority: 22.02.1993 JP 74961/93
(43) Date of publication of application: 31.08.1994
(73) Proprietor: KANTO YAKIN KOGYO KABUSHIKI KAISHA, Hiratsuka-shi, Kanagawa-ken (JP)
(72) Inventor: Takahashi, Susumu, Yokohama (JP)
(74) Representative: Lord, Hilton David

(56) References cited:
- EP-A- 0 140 267
- US-A- 4 643 348
- US-A- 4 873 423
- PATENT ABSTRACTS OF JAPAN vol. 15, no. 208 (M-1117) 28 May 1991 & JP-A-03 057 590 (SHOWA ALUM CORP) 12 March 1991
- PATENT ABSTRACTS OF JAPAN vol. 12, no. 201 (M-707) 10 June 1988 & JP-A-63 005 896 (NIPPON RADIATOR CO LTD)

## Description

The present invention relates to methods for brazing metallic alloys containing readily oxidisable components such as aluminium, titanium and zirconium.

Copper and iron based alloys containing aluminium, titanium, zirconium and other such readily oxidisable components are now widely used throughout industry, owing to their useful properties.

However, alloys containing such readily oxidisable components are difficult to braze by standard techniques, as they tend to be covered with a layer of oxide.

Conventional brazing techniques require a flux in conjunction with high temperature alloys, and such fluxes characteristically comprise chloride compounds. The chlorides used tend to be deliquescent, and must be used in large quantities. Accordingly, it is necessary to remove the flux after the brazing operation in order to prevent any unnecessary oxidation which might occur in the presence of deliquescing water. The removal of the used flux is difficult and requires the use of large quantities of water. Cleaning the waste water presents its own problems.

EP-A-140267 describes the brazing of aluminium based articles using fluoride based solders. However, such articles are brazed at low temperatures, where oxidisation during brazing is not a problem.

Thus, there is a requirement for a technique for the brazing of alloys containing readily oxidised materials wherein the flux which is used does not need to be washed off, and only needs to be used in small quantities.

We have now found that it is possible to overcome the above problems by using a fluoride flux, together with a high temperature solder.

Thus, in a first aspect, there is provided a method for the brazing of a copper or iron based alloy containing one or more readily oxidisable components, such as aluminium, titanium and/or zirconium, said method comprising using a high temperature solder and a flux, characterised in that the flux is non-deliquescent, has a melting point of 600°C or higher, and comprises fluorides, or fluorine based compounds.

The fluxes of the invention should preferably contain no chlorides. If chlorides are present, then they should be present only in small amounts, preferably only in trace amounts, and particularly preferably none at all. The flux will usually be prepared as a slurry with water before use but, before the addition of water, it is preferred that the flux consists essentially of a fluoride. Particularly preferred fluorides are Na₃AlF₆ and Li₃AlF₆. It is especially preferred that Na₃AlF₆ is used for iron based alloys, and that Li₃AlF₆ is used for copper based alloys.

When brazing iron or copper based alloys, it is necessary to use high temperature conditions. Under such conditions, the rate of uptake of oxygen or moisture from the atmosphere is high and, as the flux liquefies, it tends to oxidise and be consumed at a rapid rate, so that large amounts of flux need to be used. When a flux containing fluorides or fluorine based compounds is used, the residue is not corrosive, so that it is not necessary to wash it off, and it is also possible to use the flux in small enough quantities that inconvenience or unsightliness is avoided.

In order to ensure that little or no deliquescing or oxidation occurs, we prefer to use an inert atmosphere, typically nitrogen or argon.

Any suitable means for creating an inert atmosphere may be used. An inert atmosphere ideally consists of a gas which is inert, or substantially inert, under the conditions used. Noble gases, especially argon, are preferred, but these tend to be expensive to use in practice. For the purposes of the present invention, we find that nitrogen may be used to create a suitable inert atmosphere.

The gas used for the inert atmosphere should be at least substantially inert, and should be as dry as possible and free from contaminants. In practice, a gas that has a dew point below -45°C, preferably below -60°C has been found to provide a suitable level of protection. A significant major contaminant will usually be oxygen, and we prefer to keep levels of oxygen at less than 50ppm, preferably less than 10ppm.

It will be appreciated that, in order to maintain a controlled environment, the brazing operation must be performed under controlled conditions. For this purpose, it may be convenient to employ a muffle, such as a metal muffle. The inert atmosphere can then be created and maintained within the muffle, and the brazing operation can be performed in the controlled atmosphere. However, where the operation is performed at temperatures in the region of 1,100°C or above, then it becomes increasingly impractical to employ a metallic muffle. We have found that it is advantageous to use a muffle made of carbon, or preferably carbon fibre reinforced carbon. This is not only because carbon is stable at these temperatures, but also because it assists with maintaining the desired low partial pressure of oxygen. Alternatively, it may be desirable to fashion the inner furnace walls at least partly from carbon and/or carbon fibre reinforced carbon. In addition, if a conveyor belt type continuous furnace is employed for the brazing operation, then it is preferable to make the belt from carbon filament reinforced carbon.

As stated above, carbon is generally more stable at higher temperatures. In addition, we have found that the trace amounts of oxygen which enter the furnace together with the metallic parts to be joined, thereby contaminating the furnace atmosphere, react with the carbon of the muffle, furnace walls or conveyor belt. Thus, any oxygen which manages to enter the system is quickly absorbed by the carbon present, thereby maintaining an inert atmosphere possessing the desired dew point and minimal oxygen levels. Furthermore, the erosion by oxidation of the carbonised furnace walls or muffle by such oxidation is so small that structural damage does not amount to much even after operation for as long as 10 years.

It general, it will be appreciated that the solders used in accordance with the present invention are high temperature solders. The preferred solders are based on copper, nickel, silver or gold.

Thus, in a preferred embodiment, the present invention provides a brazing method for metallic materials which contain one or more of aluminium, titanium and zirconium comprising use of a high temperature copper-based, nickel-based, silver-based or gold-based solder, together with a non-deliquescent flux having a melting point of equal to or more than 600°C and which is made of fluorides or fluorine compounds but no chlorides, under an inert brazing atmosphere.

Thus, we have discovered that, where previously it was thought to be virtually impossible to braze articles having a copper or iron base alloys containing, for example, aluminium, titanium or zirconium owing to their tendency to oxidise, brazing is possible using a non-deliquescent flux which does not need to be washed off with water after brazing, especially where the operation is performed in a non-explosive inert gas atmosphere. It is also advantageous that, in the present invention, the amount of flux which needs to be used is minimised, so that the amount of residues is practically negligible.

The invention will now be illustrated by reference to the following Examples. In the following Examples, the term "%" is by weight, unless otherwise specified.

### Example 1

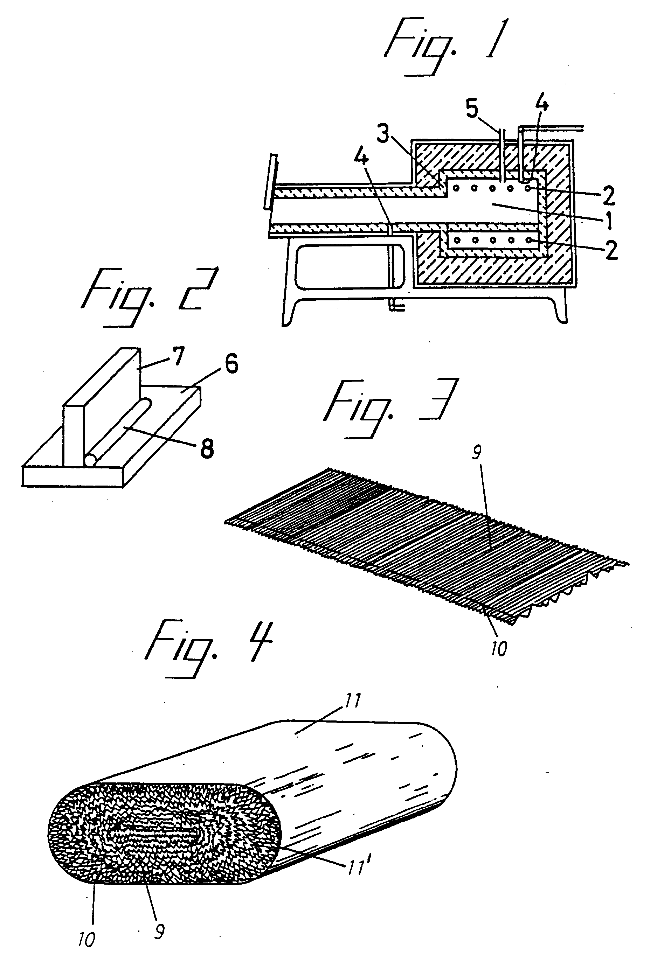

A furnace as illustrated in Figure 1 was prepared and used. Figure 1 shows a vertical sectional side view of a batch type furnace useful in the methods of the present invention. In the Figure, numeral 1 represents a high temperature chamber surrounded by carbon walls 3. Numeral 2 represents a heater means for heating the high temperature chamber, pipe 4 supplies inert gas into the chamber, and tube 5 is for a thermometer.

Figure 2 is a perspective view of the type of test piece brazed in this and the following Example 2.

Test pieces were constructed as shown in Figure 2. These were made from stainless steel containing 5.0% aluminium and 0.1% titanium in an inverted T-shape, consisting of a bottom plate 6 (3mm thick, 25mm wide, 55mm long), and a vertical plate 9 (3mm thick, 25mm wide, 45mm long). Oxygen-free copper, 1.2mm in diameter and 45mm long, melting at 1,083°C, was used as the high temperature solder 8, while Na₃AlF₆, melting at 1,000°C, was used as the flux. The flux was diluted with water to a slurry of 10% density and sprayed over the test piece.

The test piece was heated to 1,100°C in the furnace under a nitrogen atmosphere and, once it had reached this temperature, was kept there for 3 minutes. Thereafter, it was cooled, still under a nitrogen atmosphere.

The resulting brazed test piece had an excellent fillet along its joints, resulting in the production of strong and tightly brazed joints, while there was scarcely any flux residue to be found. The atmosphere in the high temperature chamber 1 was sampled during the brazing operation, and the oxygen density was measured at 8ppm, while the dew point was measured at -58°C.

### Example 2

Test pieces similar to those of Example 1 were constructed, but from JIS C6161 aluminium bronze. The high temperature solder used was BAg-8 silver alloy solder (1.2mm diameter, 45mm long, melting at 780°C), while the non-deliquescent flux was a mixture of Li₃AlF₆ (53%) and KAlF₄ (47%) diluted with water to a slurry of 10% density and sprayed over the test piece.

The test piece was heated to 860°C in the furnace under a nitrogen atmosphere and, once it had reached this temperature, was kept there for 3 minutes. Thereafter, it was cooled, still under a nitrogen atmosphere.

The resulting brazed test piece had an excellent fillet along its joints, resulting in the production of strong and tightly brazed joints, while there was scarcely any flux residue to be found. The atmosphere in the high temperature chamber 1 was sampled during the brazing operation, and the oxygen density was measured at 6ppm, while the dew point was measured at -58°C.

### Example 3

A metal catalyst carrier was made in accordance with the present invention. Metal catalyst carriers, such as illustrated in Figure 4 (showing a perspective view of the carrier), may be employed, for example, in the catalytic convertors of cars to render automobile exhaust gas harmless.

A corrugated, aluminium-containing, nickel-chromium-silver alloy foil 9 (illustrated in Figure 3), which provides a metallic catalyst, was plated to about 10µm thick on lateral side 10 (about 20mm wide) with a high temperature nickel solder containing about 7% phosphorus and melting at 1,000°C. A non-deliquescent flux was prepared by diluting Na₃AlF₆ powder having a melting point of 1,000°C with water to a slurry of 10% density which was then sprayed over the foil.

The foil was wound up into a large number of continuous and cylindrical layers, and inserted into a stainless steel tube 11 of oval section.

The foil and tube assembly was heated for 13 minutes in the furnace 1 under a pure argon atmosphere, and then cooled.

The layers of the foil 9 were well brazed together at the majority of points, and the outermost layer of the foil was brazed well onto the inner wall of tube 11.

## Claims

1. A method for the brazing of a copper or iron based alloy containing one or more readily oxidisable components, such as aluminium, titanium and/or zirconium, said method comprising using a high temperature solder and a flux, characterised in that the flux is non-deliquescent, has a melting point of 600°C or higher, and comprises fluorides, or fluorine based compounds.

2. A method according to Claim 1, wherein the flux contains substantially no chlorides, and preferably no chlorides at all.

3. A method according to any preceding Claim, wherein the flux is used in sufficiently small quantities that there is no requirement to remove any residue thereof after brazing.

4. A method according to any preceding Claim, wherein said brazing is performed in an inert atmosphere.

5. A method according to Claim 4, wherein said atmosphere consists essentially of nitrogen and/or argon.

6. A method according to Claim 4 or 5, wherein said atmosphere has a dew point below -45°C, preferably below -60°C.

7. A method according to Claim 4, 5 or 6, wherein said atmosphere has an oxygen content of less than 50ppm, preferably less than 10ppm.

8. A method according to any preceding Claim, wherein any one or more of a conveyor belt, if used, a muffle, if used, and the inner walls of the brazing furnace are at least partly formed from carbon and/or carbon fibre reinforced carbon.

9. A method according to any preceding Claim, wherein the solder is based on copper, nickel, silver or gold.

10. A method according to any preceding Claim, wherein the piece to be brazed comprises one or more of aluminium, titanium and zirconium.

11. A method according to any preceding Claim, wherein the piece to be brazed is an alloy of copper.

12. A method according to any of Claims 1 to 10, wherein the piece to be brazed is an alloy of stainless steel or heat resisting steel.

13. A method according to any preceding Claim, especially Claim 12, wherein the flux contains Na₃AlF₆.

14. A method according to any preceding Claim, especially Claim 11, wherein the flux contains Li₃AlF₆.

## Patentansprüche

1. Verfahren zum Hartlöten von auf Kupfer oder Eisen basierenden Legierungen die ein oder mehrere leicht oxidierbare Bestandteile enthalten, wie Aluminium, Titan und/oder Zirkon, wobei das besagte Verfahren den Einsatz eines Hochtemperatur-Lötmittels und eines Flußmittels umfaßt, dadurch gekennzeichnet, daß das Flußmittel bei Feuchtigkeit nicht zerfließt, einen Schmelzpunkt von 600°C oder höher besitzt und Fluoride oder auf Fluor basierende Verbindungen einschließt.

2. Verfahren gemäß Anspruch 1, worin das Flußmittel im wesentlichen keine Chloride enthält und vorzugsweise überhaupt keine Chloride.

3. Verfahren gemäß irgendeinem vorhergehenden Anspruch, worin das Flußmittel in ausreichend kleinen Mengen benutzt wird damit keine Notwendigkeit besteht irgendeinen Rückstand desselben nach dem Hartlöten zu entfernen.

4. Verfahren gemäß irgendeinem vorhergehenden Anspruch, worin das besagte Hartlöten in einer Inertatmosphäre durchgeführt wird.

5. Verfahren gemäß Anspruch 4, worin die besagte Atmosphäre im wesentlichen aus Stickstoff und/oder aus Argon besteht.

6. Verfahren gemäß Anspruch 4 oder 5, worin die besagte Atmosphäre einen Taupunkt unter -45°C, vorzugsweise unter -60°C besitzt.

7. Verfahren gemäß Anspruch 4, 5 oder 6, worin die besagte Atmosphäre einen Sauerstoffgehalt von weniger als 50 ppm, vorzugsweise von weniger als 10 ppm besitzt.

8. Verfahren gemäß irgendeinem vorhergehenden Anspruch, worin irgendeines oder mehrere der Förderbänder, wenn solche benutzt werden, eine Muffel, wenn eine solche benutzt wird, und die inneren Wände des Lötofens wenigstens teilweise aus Kohlenstoff und/oder aus mit Kohlenstoff-Fasern verstärktem Kohlenstoff gebildet werden.

9. Verfahren gemäß irgendeinem vorhergehenden Anspruch, worin das Lötmittel auf Kupfer, Nickel, Silber oder Gold basiert.

10. Verfahren gemäß irgendeinem vorhergehenden Anspruch, worin das zu hartlötende Stück eines oder mehrere der Elemente Aluminium, Titan und Zirkon einschließt.

11. Verfahren gemäß irgendeinem vorhergehenden Anspruch, worin das zu hartlötende Stück eine Legierung des Kupfers ist.

12. Verfahren gemäß irgendeinem der Ansprüche 1 bis 10, worin das zu hartlötende Stück eine Legierung von rostfreiem Stahl oder von hitzebeständigem Stahl ist.

13. Verfahren gemäß irgendeinem vorhergehenden Anspruch, insbesondere Anspruch 12, worin das Flußmittel Na₃AlF₆ enthält.

14. Verfahren gemäß irgendeinem vorhergehenden Anspruch, insbesondere Anspruch 11, worin das Flußmittel Li₃AlF₆ enthält.

## Revendications

1. Procédé pour le brasage d'un alliage à base de cuivre ou de fer contenant un ou plusieurs composants facilement oxydables, comme l'aluminium, le titane et/ou le zirconium, ledit procédé comprenant l'utilisation d'un produit de brasage pour haute température ainsi que d'un flux, caractérisé en ce que le flux est non déliquescent, possède un point de fusion de 600°C ou plus élevé, et comprend des fluorures ou des composés basés sur le fluor.

2. Procédé suivant la revendication 1, dans lequel le flux ne contient essentiellement pas de chlorures, et de préférence pas de chlorures du tout.

3. Procédé suivant l'une quelconque des revendications précédentes, dans lequel le flux est utilisé en quantités suffisamment faibles pour n'avoir aucun besoin d'enlever un quelconque résidu de celui-ci après le brasage.

4. Procédé suivant l'une quelconque des revendications précédentes, dans lequel ledit brasage est réalisé sous une atmosphère inerte.

5. Procédé suivant la revendication 4, dans lequel ladite atmosphère est constituée essentiellement d'azote et/ou d'argon.

6. Procédé suivant la revendication 4 ou 5, dans lequel ladite atmosphère possède un point de rosée inférieur à -45°C, de préférence inférieur à -60°C.

7. Procédé suivant la revendication 4, 5 ou 6, dans lequel ladite atmosphère possède une teneur en oxygène inférieure à 50 ppm, de préférence inférieure à 10 ppm.

8. Procédé suivant l'une quelconque des revendications précédentes, dans lequel une quelconque des bandes transporteuses, en cas d'utilisation, un four à moufle, en cas d'utilisation, et les parois intérieures du four de brasage sont constitués au moins en partie de carbone et/ou de carbone renforcé de fibres de carbone.

9. Procédé suivant l'une quelconque des revendications précédentes, dans lequel le produit de brasage est à base de cuivre, de nickel, d'argent ou d'or.

10. Procédé suivant l'une quelconque des revendications précédentes, dans lequel la pièce à braser contient un ou plusieurs des éléments aluminium, titane et zirconium.

11. Procédé suivant l'une quelconque des revendications précédentes, dans lequel la pièce à braser est un alliage de cuivre.

12. Procédé suivant l'une quelconque des revendications 1 à 10, dans lequel la pièce à braser est un alliage d'acier inoxydable ou d'acier réfractaire.

13. Procédé suivant l'une quelconque des revendications précédentes, plus particulièrement la revendication 12, dans lequel le flux contient du Na₃AlF₆.

14. Procédé suivant l'une quelconque des revendications précédentes, plus particulièrement la revendication 11, dans lequel le flux contient du Li₃AlF₆.
